# EUROPEAN PATENT SPECIFICATION

(11) **EP 2 880 752 B1**
(45) Date of publication and mention of the grant of the patent: **21.12.2016**
(21) Application number: 13740238.4
(22) Date of filing: 18.07.2013
(51) Int. Cl.: H02M 1/32

(54) **OVERLOAD LIMITATION IN PEAK POWER OPERATION**
ÜBERLASTBEGRENZUNG BEI SPITZENLASTBETRIEB
LIMITATION DE SURCHARGE EN FONCTIONNEMENT DE PUISSANCE DE CRÊTE

(30) Priority: 03.08.2012 EP 12179165
(43) Date of publication of application: 10.06.2015
(73) Proprietor: ABB Schweiz AG, 5400 Baden (CH)
(72) Inventor: SIEMASZKO, Daniel, CH-1201 Genf (CH); ECKERLE, John, CH-4058 Basel (CH); DOUZDOUZANI, Ata, CH-5413 Birmenstorf (CH); RUETTEN, Klaus, 79761 Waldshut-Tiengen (DE)
(74) Representative: ABB Patent Attorneys
(86) International application number: PCT/EP2013/065155
(87) International publication number: WO 2014/019860

(56) References cited:
- EP-A2- 1 816 733
- WO-A1-2011/073093

## Description

### Technical field

The present invention relates to power converters, in particular to methods for operating power converters in a boost mode.

### Related art

Power converters are used to drive all kinds of electric power appliances, such as motors or the like. Such power converters are specified by their nominal power which indicates the amount of power to be supplied on a permanent basis without risking overheating or other damage to the used semiconductor devices therein, such as MOSFETs, thyristors, IGBTs and the like. The nominal power of a semiconductor device is usually defined as a power which, when supplied, causes the temperature within the semiconductor device to not exceed the temperature limit which is defined by the maximum allowable temperature for the semiconductor junction of the semiconductor device.

From document Murdock, D. A. et al., "Active Thermal Control of Power Electronic Modules", IEEE Transactions on industry applications, Volume 42, No. 2, pp. 552-558, March-April 2006, it is known for power electronic modules to control the steady-state operation by thermal control for reaching maximum possible continuous operation.

Document WO 2009/033 999 A2 discloses a method wherein an actual temperature value of the semiconductor component is determined and, based on the actual temperature value and on a target temperature value, an actuator of a temperature control device, such as a motor cooling system, is actuated to adjust the actual temperature value. The actual temperature value is determined based on a temperature model.

Document JP 2011223678 A discloses a device having a protection unit. A calculation unit calculates the junction temperature of a switching element and the temperature of a proximity unit from a terminal resistance and a thermal time constant thereof. A correction unit corrects the junction temperature of the switching element based on the difference between the temperatures. A gate drive circuit or control unit is controlled such that the junction temperature of the corrected switching element does not exceed a temperature limitation value.

Document WO 2006/087618 A1 discloses a regulator having a temperature detecting unit to detect the temperature of an inverter. A limitation temperature setting unit sets the limitation temperature to a smooth temperature obtained by performing a smoothing process on the detected temperature when a change value of the detected temperature is below a preset value. An operating unit limits the operation of the inverter as an indication temperature increases.

Document SU 1 410 179 A discloses a method for operating a converter, wherein a signal proportional to a temperature of a p-n junction of a thyristor is compared to a fixed setting proportional to the maximum permissible temperature. If the temperature of the p-n junction exceeds the maximum permissible temperature, an actuator will trip the converter or limit the current through the thyristor.

Document US 5,373,205 provides a control method defining a current limit, which is defaulted to a peak current, and in response to a temperature detected, which is in excess of a maximum allowable temperature, a nominal current limit is set. The current limit reset is reset to a peak current after it is detected that the temperature is below the maximum allowable temperature by a predetermined magnitude.

Document EP 0 971 573 B1 discloses a regulator for traction drives which is cooled by means of a cooling medium, wherein the amount of cooling medium for cooling the regulator is controlled according to a required temperature.

Document EP 1 816 733 A2 discloses a method for operating a frequency converter with a periodically changing load characteristic. At the beginning of a new period the temperature of the critical components, such as power semiconductors, of the frequency converter are predicted. In case an overheating of the critical components is predicted, only a reduced load for the frequency converter is allowed so that the overheating can be prevented during the load cycle.

It is an object of the present invention to provide an overheating-protected operation for electrical appliances which have a power consumption exceeding the nominal power of the power converter.

### Summary of the present invention

The above object has been achieved by the method for operating a power converter for providing electrical energy to an electrical appliance according to claim 1.

Further embodiments are indicated in the depending subclaims.

According to a first aspect there is provided a method for operating a converter to supply electrical power to a load, comprising the steps of:
- controlling the converter for a provided overload time period so that overload power is applied to the load; and
- controlling the converter for a provided resting time period so that resting power is applied to the load;
- wherein the overload power is higher than a nominal power which corresponds to a steady-state operation limit of the converter, wherein the resting power is lower than the nominal power,
- wherein the converter (3) is controlled in response to an externally provided information, wherein the power applied to the load (2) is limited as soon as the externally provided information causes the converter (3) to provide overload power for more than a given maximum overload time period,
- wherein after the maximum overload time period the power to be applied to the load (2) is limited according to a limitation function which provides a limitation value which reduces an allowable power from the overload power to the nominal power according to a predetermined time characteristics, by which a stepwise reduction of power is avoided.

One idea of the present invention is to allow a power converter to be operated such that overload power exceeding a nominal power can be provided for a specific overload time period as long as the power converter is subsequently operated to supply a resting power which is below or equal to the nominal power during a specific resting time period. This operating scheme allows for the use of electrical appliances with a power converter even if the electrical appliances have a short-timed power consumption which goes beyond the nominal power of the power converter connected thereto. Hence, a power converter is allowed to be boosted over its nominal operation point and an overload operation for a specific overload time period is allowed, on the condition that there is a subsequent resting time period for the overall system, e. g. to cool down or to settle. The overload power operation may be designed for the overload time period following a profile of overloadability allowance as a function of time and overload power.

According to the invention, the converter is controlled in response to an externally provided information, wherein the power applied to the load is limited as soon as the externally provided information causes the converter to provide overload power for more than a given maximum overload time period and after the maximum overload time period, the power to be applied to the load may be limited according to a limitation function which provides a limitation value which reduces the allowable power from the overload power to the nominal power according to a predetermined time characteristics.

This method for operating a converter has the advantage that the converter can be operated in any overload power condition, which must not previously be known. The converter can in particular react to a previously unknown overload power condition.

Furthermore, the resting power and resting period may be set such that at least one parameter, in particular a temperature of the converter, returns to its initial value at the start of the overload period.

It may be provided that the overload power and overload time period are set such that at least one parameter, in particular a temperature of the converter, does not exceed a limit during the overload time.

Furthermore, the resting time period may directly follow the time overload period.

Moreover, the overload time period and the resting time period may be periodically repeated.

The maximum overload time period may be a period in which a temperature in the converter reaches a predetermined maximum temperature limit.

Moreover, the predetermined time characteristics may define a linear or exponential slope from the overload power to the nominal power.

According to a further aspect, there is provided an apparatus for operating a converter to supply electrical power to a load, comprising a control unit which is configured to:
- control the converter for a provided overload time, so that overload power is applied to the load; and
- control the converter for a provided resting time, so that resting power is applied to the load;
   wherein the overload power is higher than a nominal power which corresponds to a steady-state operation limit of the converter, wherein the resting power is lower than the nominal power.

According to another aspect, there is provided a system comprising a load, a converter for supplying electrical power to the load, and the above apparatus.

### Brief description of the drawings

Preferred embodiments of the present invention are described in more detail in conjunction with the accompanying drawings, in which:
- Figure 1: shows a system having a power converter to supply an electrical appliance with electrical energy;
- Figure 2: shows a diagram illustrating the power output of the power converter of the system according to Figure 1 and the resulting junction temperature of a semiconductor switch in the power converter; and
- Figure 3: shows a diagram illustrating the power output of the power converter of the system according to Figure 1, the power limitation as well as the resulting junction temperature of a semiconductor switching device of the power converter.

### Detailed description of embodiments

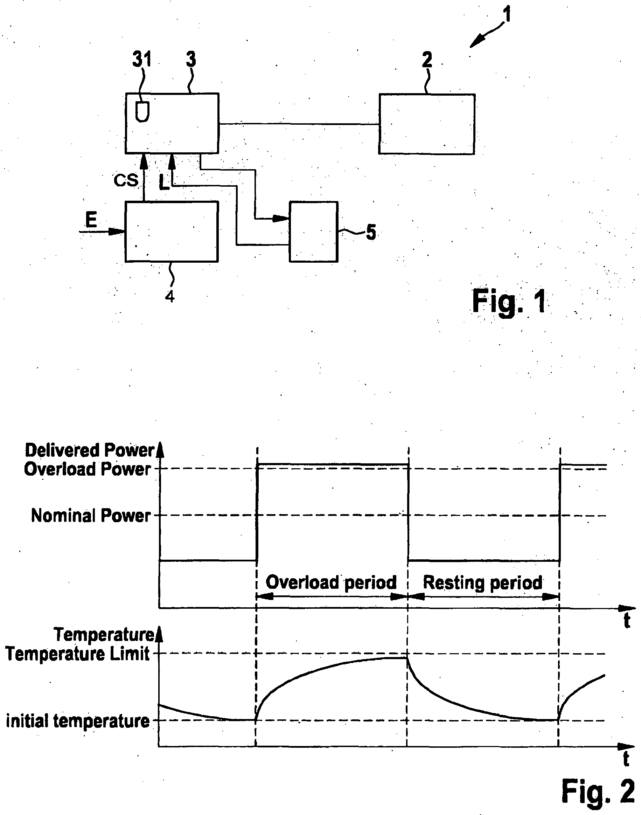

Figure 1 shows a system 1 for providing electrical energy to a load (electrically drive unit) 2. The load 2 may be a part of a manufacturing facility and used to drive a tool part periodically. For instance, the load 2 may be a power drive or a similar load.

Electrical energy is provided to the load 2 by means of a power converter 3 which has included switching devices 31 to provide a predetermined amount of electrical power to the load 2. The switching devices 31 may be configured as power semiconductor devices, such as power MOSFETs, thyristors, IGBTs, IGCTs and the like. The switching devices may be arranged in a driver configuration such as a power inverter, half-bridge configuration, full bridge configuration or the like.

Due to the heat sensitivity of the switching devices, the power converter 3 has a limited temperature operating range whose upper limit is determined by the maximum p-n junction temperature of the semiconductor devices used therein. As exceeding the maximum allowable junction temperature may affect the operability and/or lifetime of the semiconductor switching device, the maximum allowable temperature must not be exceeded.

For the power converter 3 there is thus defined a nominal power which represents the power output of the power converter 3 on a continuous operation basis, wherein the nominal power indicates the maximum power output of the power converter 3 at which the junction temperature of the semiconductor devices approaches or arrives at the maximum allowable temperature under usual predefined environmental conditions.

The load 2 may be configured to consume power exceeding the nominal power output of the power converter 3 in a non-continuous manner, i. e. periodically or intermittently.

As shown in the diagram of Figure 2, the electrical appliance 2 is allowed to consume overload power for a specific overload time period. The overload power can be e.g. up to 40% above the nominal power which defines the steady-state operation limit while the overload time period is set to a predetermined duration which may be fixedly set or which may be dependent on the amount of overload power requested by the load.

After the overload time period during which overload power is supplied to the load 2, the power output is reduced to a power level which is lower than the nominal power for a specific resting time period. The resting power and the resting time period may be adapted such that the semiconductor devices can cool down to a predetermined temperature which is lower than the maximum allowable temperature. In case of a periodic operation of supplying overload power and resting power, the resting period and resting power are adapted such that at the end of the resting period the junction temperature has arrived at an initial temperature from which temperature may increase when applying overload power during a next (subsequent) overload period.

A control unit 4 is provided which controls the power converter 3 depending on control signals CS. The control signals CS are generated according to a predefined scheme following an externally provided signal E, which may be provided by a process control or the like. The externally provided signal E indicates the power at which the load 2 shall actually be operated.

Furthermore, a supervisor unit 5 is provided which permanently, regularly or cyclically receives from the power converter 3 or the control unit 4, respectively, the actual amount of power being supplied to the load 2. Mainly, the supervisor unit 5 applies a power limitation by accordingly commanding the converter unit 3 in case overload power is applied to the load 2 for an overload time period which exceeds a predetermined overload period threshold. The limitation is performed by providing a limitation value L to the power converter 3, such that the power converter 3 limits its power output according to the limitation value L.

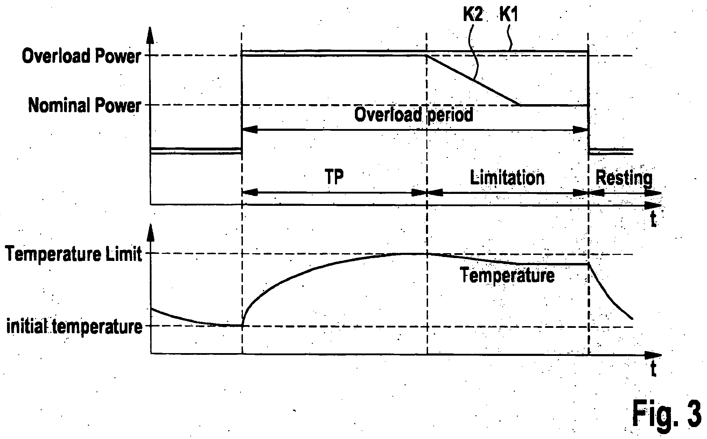

As shown in the diagram of Figure 3, the limitation will take its effect if the overload power is required for more than the predetermined maximum overload time period TP, as indicated by curve K1 (required power) in the diagram of Figure 3. The maximum overload time period TP is defined by the period in which the junction temperature arrives at the temperature limit when starting from an initial temperature at the beginning of the overload time period for which the overload power shall be applied.

The limitation is made according to the limitation curve K2 (limitation function) which may provide a ramp down from overload power to nominal power after the maximum overload time period TP, so that the junction temperature may be kept at the temperature limit and is no longer increasing. The transition between providing the overload power to nominal power can be shaped as a linear slope or with an exponential characteristics to limit the power supply of the load 2 back to nominal power. The gradient of the slope from the overload power level down to nominal power may be depending on the kind of load 2 attached, the amount of overload power, the duration of the overload period or the like. Essentially, a stepwise (sudden) reduction of the power applied to the load 2 should be avoided due to undesired effects such as reflections in the connecting lines, electromagnetic interferences and the like.

The power limitation can be performed by limiting the output current of the power converter 3, by limiting the output voltage of the power converter 3, by limiting (or reducing) the switching frequency of the power converter 3 or the like.

### Reference list

- 1.: System
- 2: Load
- 3: Power converter
- 4: Control unit
- 5: Supervisor unit
- 31: Semiconductor device

## Claims

1. Method for operating a converter (3) to supply electrical power to a load (2), comprising the steps of:
- controlling the converter (3) for a provided overload time period, so that overload power is applied to the load (2); and
- controlling the converter (3) for a provided resting time period, so that resting power is applied to the load (2);
wherein the overload power is higher than a nominal power which corresponds to a steady-state operation limit of the converter (3), wherein the resting power is lower than the nominal power,
- wherein the converter (3) is controlled in response to an externally provided information, wherein the power applied to the load (2) is limited as soon as the externally provided information causes the converter (3) to provide overload power for more than a given maximum overload time period,
- wherein after the maximum overload time period the power to be applied to the load (2) is limited according to a limitation function which provides a limitation value which reduces an allowable power from the overload power to the nominal power according to a predetermined time characteristics, by which a stepwise reduction of power is avoided.

2. Method according to claim 1, wherein the resting power and resting time period are set such that at least one parameter, in particular a temperature of the converter (3), returns to an initial value at the start of the overload time period.

3. Method according to claim 1 or 2, wherein the overload power and overload time period are set such that at least one parameter, in particular a temperature of the converter, does not exceed a limit during the overload time period.

4. Method according to any one of claims 1 to 3, wherein the resting time period directly follows the overload period.

5. Method according to any one of claims 1 to 4, wherein the overload time period and the resting time period are periodically repeated.

6. Method according to any one of claims 1 to 5, wherein the maximum overload time period is a period in which a temperature in the converter (3) arrives at a predetermined maximum temperature limit.

7. Method according to any one of claims 1 to 6, wherein the predetermined time characteristics defines a linear or exponential slope from the overload power to the nominal power.

## Patentansprüche

1. Verfahren zum Betreiben eines Umrichters (3), um eine Last (2) mit elektrischer Leistung zu versorgen, das folgende Schritte umfasst:
- Steuern des Umrichters (3) über einen vorgesehenen Überlastzeitraum hinweg, sodass die Überlastleistung auf die Last (2) angewendet wird; und
- Steuern des Umrichters (3) über einen vorgesehenen Ruhezeitraum hinweg, sodass die Ruheleistung auf die Last (2) angewendet wird;
wobei die Überlastleistung höher als eine nominale Leistung ist, die einer Dauerzustand-Betriebsgrenze des Umrichters (3) entspricht, wobei die Ruheleistung niedriger als die nominale Leistung ist,
- wobei der Umrichter (3) als Reaktion auf extern bereitgestellte Informationen gesteuert wird, wobei die Leistung, die auf die Last (2) angewendet wird, beschränkt wird, sobald die extern bereitgestellten Informationen den Umrichter (3) veranlassen, Überlastleistung über mehr als einen gegebenen maximalen Überlastzeitraum hinweg bereitzustellen,
- wobei nach der maximalen Überlastzeit die Leistung, die auf die Last (2) angewendet werden soll, gemäß einer Begrenzungsfunktion, die einen Begrenzungswert bereitstellt, der eine zulässige Leistung von der Überlastleistung zu der nominalen Leistung gemäß vorbestimmter Zeiteigenschaften verringert, begrenzt wird, wodurch eine schrittweise Leistungsverringerung vermieden wird.

2. Verfahren nach Anspruch 1, wobei die Ruheleistung und der Ruhezeitraum derart festgelegt sind, dass mindestens ein Parameter, insbesondere eine Temperatur des Umrichters (3), auf einen anfänglichen Wert zu Beginn des Überlastzeitraums zurückgeht.

3. Verfahren nach Anspruch 1 oder 2, wobei die Überlastleistung und der Überlastzeitraum derart festgelegt sind, dass mindestens ein Parameter, insbesondere eine Temperatur des Umrichters, eine Grenze während des Überlastzeitraums nicht übersteigt.

4. Verfahren nach einem der Ansprüche 1 bis 3, wobei der Ruhezeitraum direkt auf den Überlastzeitraum folgt.

5. Verfahren nach einem der Ansprüche 1 bis 4, wobei der Überlastzeitraum und der Ruhezeitraum periodisch wiederholt werden.

6. Verfahren nach einem der Ansprüche 1 bis 5, wobei der maximale Überlastzeitraum ein Zeitraum ist, in dem eine Temperatur in dem Umrichter (3) an einer vorbestimmten maximalen Temperaturgrenze ankommt.

7. Verfahren nach einem der Ansprüche 1 bis 6, wobei die vorbestimmten Zeiteigenschaften einen linearen oder exponentiellen Abfall von der Überlastleistung zu der Nominalleistung definieren.

## Revendications

1. Procédé pour faire fonctionner un convertisseur (3) pour fournir une énergie électrique à une charge (2), comprenant les étapes consistant à :
- commander le convertisseur (3) pendant une période de temps de surcharge prévue de telle sorte qu'une puissance de surcharge soit appliquée à la charge (2) ; et
- commander le convertisseur (3) pendant une période de temps de repos prévue de telle sorte que la puissance de repos soit appliquée à la charge (2); dans lequel la puissance de surcharge est plus importante qu'une puissance nominale qui correspond à une limite de fonctionnement en régime stable du convertisseur (3),
dans lequel la puissance restante est inférieure à la puissance nominale,
- dans lequel le convertisseur (3) est commandé à la suite d'une information fournie à l'extérieur, dans lequel la puissance appliquée à la charge (2) est limitée aussi longtemps que l'information fournie à l'extérieur contraint le convertisseur (3) à fournir une puissance de surcharge pendant plus longtemps qu'une période de temps de surcharge maximale donnée,
- dans lequel, après la période de temps de surcharge maximale, la puissance qui doit être appliquée à la charge (2) est limitée selon une fonction de limitation qui fournit une valeur de limitation qui réduit une puissance admissible entre la puissance de surcharge et la puissance nominale selon une caractéristique de temps prédéterminée, au moyen de laquelle une réduction pas à pas de la puissance est évitée.

2. Procédé selon la revendication 1, dans lequel la puissance de repos et la période de temps de repos sont déterminées de telle sorte que le ou les paramètres, en particulier une température du convertisseur (3), renvoient à une valeur initiale au début de la période de temps de surcharge.

3. Procédé selon la revendication 1 ou 2, dans lequel la puissance de surcharge et la période de temps de surcharge sont déterminées de telle sorte que le ou les paramètres, en particulier une température du convertisseur, ne dépassent pas une limite pendant la période de temps de surcharge.

4. Procédé selon l'une quelconque des revendications 1 à 3, dans lequel la période de temps restante suit directement la période de surcharge.

5. Procédé selon l'une quelconque des revendications 1 à 4, dans lequel la période de temps de surcharge et la période de temps de repos sont répétées de manière périodique.

6. Procédé selon l'une quelconque des revendications 1 à 5, dans lequel la période de temps de surcharge maximale est une période pendant laquelle une température du convertisseur (3) arrive à une limite de température maximale prédéterminée.

7. Procédé selon l'une quelconque des revendications 1 à 6, dans lequel la caractéristique de temps prédéterminée définit une pente linéaire ou exponentielle entre la puissance de surcharge et la puissance nominale.
